(19) **Europäisches Patentamt**

**European Patent Office**

**Office européen des brevets**

(11) **EP 1 056 595 B1**

(12) **EUROPEAN PATENT SPECIFICATION**

(45) Date of publication and mention
of the grant of the patent:
**24.03.2004 Bulletin 2004/13**

(21) Application number: **99970845.6**

(22) Date of filing: **03.11.1999**

(51) Int Cl.[7]: **B32B 9/02**, B32B 7/12,
B32B 27/00, D06N 3/12,
B29C 65/00, A41D 13/00

(86) International application number:
**PCT/EP1999/008381**

(87) International publication number:
**WO 2000/030847 (02.06.2000 Gazette 2000/22)**

(54) **LEATHER LAMINATE**

LEDERLAMINAT

STRATIFIE DE CUIR

(84) Designated Contracting States:
**AT BE CH CY DE DK ES FI FR GB GR IE IT LI LU
MC NL PT SE**
Designated Extension States:
**RO SI**

(30) Priority: **04.11.1998 DE 29819703 U**

(43) Date of publication of application:
**06.12.2000 Bulletin 2000/49**

(73) Proprietor: **W.L. GORE & ASSOCIATES GmbH
85640 Putzbrunn (DE)**

(72) Inventor: **OPITZ, Oliver
D-83502 Götting/Bruckmühl (DE)**

(56) References cited:
**WO-A-93/16612          DE-A- 2 737 756
DE-A- 2 854 464          DE-A- 4 000 156
US-A- 3 713 938          US-A- 3 827 930
US-A- 4 925 732**

**Description**

Laminates for manufacturing protective apparel are known in the art. The material and the construction of the laminate is dependent on the requirements of the protective apparel.

Protective apparel for motor cycle riders has to meet high requirements with regard to the active and passive safety of the motor cyclist wearer. Active safety includes, for example, weather protection and wear comfort. Passive safety is protection against large area abrasions, against open fractures and soft tissue injuries, against cut and puncture injuries (penetration of skin) and protection against burns. It further includes stiffness and shock absorption.

Hitherto the material which has been most suitable for making motor cyclists' protective apparel has been leather which is a natural product: The use of leather is based on a number of advantageous properties such as its abrasion characteristics, stiffness and physiological properties. A disadvantage is that highly finished leathers such as, for example, dyed or coated leathers are used. These leathers have only a low level of breathability. The low breathability leads to a significant impairment of the wear comfort of the garment, compromising the act of safety of the motor cyclist.

Leather has the further disadvantage of not being very suitable in rain, since leather, being a naturally hydrophilic material, absorbs water. A consequence is that, when it rains, the weight of leather apparel increases severalfold and the moisture soaks through the leather. The increase in the weight of the clothing and the moisture which is passed through the material create unpleasant wear properties and make the motor cyclist feel clammy, cold, wet and damp. Even a hydrophobic finish to the leather can only provide a water resisting effect, but not permanent protection against water. For instance, prolonged rain directly impinging on the garment creates a water pressure which forces the moisture through the leather. The wearer consequently requires additional protection against the rain.

It is common for motor cyclists faced with rain to wear an additional rain suit over their leather suit. This rain suit is made for example of polyurethane, PVC and also from textiles coated therewith and is consequently liquid water resistant, but also absolutely water vapor impermeable. The consequence is that the rider will very quickly start to perspire inside the motor cycle suit and develop a sense of discomfort. This sense of discomfort, which is associated with warmth or heat, sweating and moisture, reduces the physical performance capacity of the rider and thus compromises his or her active safety.

It is further known to render leather material hydrophobic by treating it with water repelling substances. However, most of the hydrophobicizers (water repelling substances) used reduce the breathability of the leather to a not inconsiderable extent, by closing open spaces and pores in the leather. The perspiration given off by the wearer of such hydrophobicized leathers cannot be transported to the outside. An attendant increase in the temperature inside the garment makes the wearer feel uncomfortable. Further, rendering a leather material hydrophobic does not make it permanently water resistant.

DE-A-27 37 756.6 (W.L. Gore & Associates GmbH) discloses a laminate comprising at least one microporous PTFE membrane laminated with at least one layer of leather or a leather substitute. Lamination may be effected by means of adhesive, coupling agent, temperature and/or pressure. The microporous PTFE membrane is described as waterproof and breathable. Such a laminate is intended for use in shoes.

It is further known that Eska & Dutka of Wels, Austria, sells gloves under the name of Eska Mot. which consist of an outer glove and an inner glove. The outer glove is made of leather. The inner glove consists of a three layer laminate where the middle layer is a functional layer which is waterproof and breathable. The inner glove with its outer surface and the outer glove with its inner surface are adhered to each other. The disadvantage of this glove construction is that the breathability of the leather is reduced by adherence to the three layer laminate. It is further possible for moisture to pass through the leather and to be absorbed by the layer between the leather and the functional layer. This makes the glove heavier and the additional moist layer further reduces the breathability of the glove.

Japanese Patent Kokai JP-A-M6-136400 teaches a leather laminat in which a plaastic film is laminated onto the surface of natural leather material. The plastic film may be made of vinyl leather or as a urethane sheet. The lamination of the plastic film makes the natural leather material more durable. The patent application discloses that the lamination is carried out by means of an adhesive or press bonding with heat. The patent application does not disclose the extent that the leather laminate is permeable to water vapour nor does it teach the details of the lamination process.

PCT Patent Application WO-A-90/00969 (Driskill et al) assigned to W.L. Gore & Associates teaches breathable flexible laminates formed using a breathable adhesive. Example 1 of this patent application discloses a laminate formed from cowhide leather adhered to a nylon fabric. Example 4 teaches a moisture permeable laminate made of cowhide leather and an expanded polytetrafluoroethylene membrane to which a knit fabric had been attached. The adhesive in example 4 was applied to each material in a dotted pattern. The patent application fails to disclose on which side of the materials the adhesive was coated.

PCT Patent Application WO 93/16612 discloses a footwear with an inner lining upper portion. The inner lining upper portion is formed of a laminate comprising a leather lining laminated to a layer of water-impermeable, water-

**EP 1 056 595 B1**

vapor-permeable expanded porous PTFE carrying an oleophobic coating and having on an outer surface thereof a knitted open nylon fabric. The laminate is arranged so that the porous expanded PTFE layer and nylon fabric are outermost and the leather lining is directed to the foot. Around the outside of the lining is provided a leather upper. However the footwear has a reduced breathability. The absorption of sweat by the hydrophilic leather lining causes an additional moisture layer which limits the ability to transport water vapor. The breathability of the footwear is further reduced by adherence the leather upper to the three layer laminate.

**SUMMARY OF INVENTION**

It is an object of the present invention to provide a laminate which is permanently resistant to liquid water and has a high water vapor permeability.

It is a further object of the invention to provide a permanently liquid water resistant and water vapor permeable laminate which has a high abrasion resistance.

It is still a further object of the present invention to provide a permanently liquid water resistant and water vapor permeable laminate which is useful for protective apparel, especially for motor cycle apparel, and meets the safety requirements of motor cyclists.

It is yet a further object of the present invention to provide a process for manufacturing a permanently liquid water resistant and water vapor permeable laminate.

These and further additional objects of the invention are achieved by the laminate of the invention. The laminate of the invention consists of a functional layer which is both liquid water resistant and water vapor permeable and has at least one leather layer. The leather layer is openly hydrophobicized and laminated with its inner surface unmediatedly onto one side of the functional layer using a powder adhesive. The laminate has a water vapor resistance (Ret) of less than $600 \times 10^{-3}$ $m^2$ mbar/w and a crumble flex durability of at least 50,000 cycles.

The laminate of the invention makes it possible to manufacture permanently liquid water resistant and water vapor permeable protective apparel in which the outer surface of the leather layer faces away from the body. The outer surface of the leather layer is directly oriented toward the outer surroundings of the wearer of the protective apparel and thus directly exposed to environmental effects such as rain, wind, sun. The outer surface of the leather layer of the laminate of the invention is advantageously the grain side of the leather layer.

The protective apparel made with the laminate of the invention combines the properties of high abrasion resistance, inherent stiffness, high breathability and permanent liquid water resistance. The wearer of the protective apparel is not in need of additional weather protection in rain, since the laminate of the invention is permanently liquid water resistant and, when incorporated in a garment, provides high wear comfort by virtue of the high water vapor permeability.

The leather layer of the laminate of the invention is openly hydrophobicized. Open hydrophobicization means that the leather layer has been rendered water resistant without the breathability (water vapour permeability) of the leather layer having been lost. This is achieved by using hydrophobicizers such as, for example fluorocarbons or polysiloxanes, which envelop the individual leather fibers with hydrophobic end groups to render them water repellent. The interstitial spaces between the leather fibers, however, remain open and continue to allow water vapor to pass through.

Preference is given to using hydrophobicizers based on fluorocarbons.

The inner surface of the leather layer is laminated unmediatedly, i.e., without further intermediate layer, onto the liquid water resistant and water vapor permeable functional layer. Lamination is preferably by means of adhesive bonding.

The unmediated and thus direct bonding of the leather layer to the functional layer has only a minimal effect on the inherently high breathability of the openly hydrophobicized leather layer, so that the laminate of the invention, comprising an openly hydrophobicized leather layer, an adhesive layer and a functional layer, has high breathability. This is because, except for the adhesive layer, there is no additional layer of material or air to form an additional barrier between the functional layer and the leather layer. Thus, water vapor transport through the laminate of the invention is dependent only on these two layers and the adhesive layer. The water vapor transmission resistance (Ret) of the laminate of the invention is preferably less than $400.10^{-3}$ $(m^2$ mbar)/W, most preferably less than $300.10^{-3}$ $(m^2$ mbar)/W. The direct lamination of the liquid water resistant and water vapor permeable functional layer to the inner surface of the leather layer confers a permanent liquid water resistance to the laminate of the invention. The laminate is waterproof to a water pressure of more than 0.13 bar. The laminate is preferably waterproof at a water pressure of more than 1 bar. Permanently liquid water resistant means that the laminate is capable of withstanding more than 50,000 cycles in the crumple flex test (measured in accordance with ISO standard 7854) without any delamination, i.e. separation, of the layers.

This novel combination of openly hydrophobicized leather layer and functional layer has thus created a novel laminate which when processed into a garment ensures pleasant wear comfort.

3

The inner surface of the leather layer is advantageously the flesh side of the leather layer, so that the strongly hydrophilic, exposed leather fibers are unmediatedly covered by the functional layer.

The unmediated lamination of the leather layer and of the functional layer is effected by a direct adhesive bond using a powder adhesive and forming an adhesive layer between the functional layer and the inner surface of the leather layer. The laminating adhesive chosen possesses good adhesion both to the leather layer and to the functional layer. During lamination, the adhesive is situated between the functional layer and the leather layer. Prior to lamination, the adhesive can be selectively applied to one side of the functional layer or to the flesh side of the leather layer. The adhesive can be used as a discontinuous layer of adhesive, i.e. in powder form. The direct and thus unmediated lamination of the functional layer onto the leather layer creates a permanent bond between these two layers.

The customary lamination adhesives can be used, for example thermoplastic and thermosetting adhesives. In a preferred embodiment, the adhesive is a polyurethane. However, it is also possible to use other adhesives such as polyesters, copolyesters, polyamides and copolyamides.

Preferably, the functional layer is provided on its other side, i.e., on the side which is remote from the leather layer, with a reinforcing layer in the form of a textile material. This reinforcing layer may additionally have the function of a thermal insulator and/or serves as lining to increase the wear comfort of the garment.

The functional layer is a membrane or a film and can be chosen from the following groups: polyesters, polyamides, polyolefins, polyvinyl chlorides, polyketones, polysulfones, polycarbonates, fluoropolymers including polytetrafluoroethylenes, polyacrylates, polyurethanes, copolyether esters and copolyetheramides. Preferably, the functional layer consists of expanded polytetrafluoroethylene which is waterproof and highly water vapor permeable.

The process for producing the laminate of the invention has the following steps: a) providing an openly hydrophobicized leather layer, b) providing a liquid water resistant and water vapor permeable functional layer c) providing an adhesive for bonding the leather layer and the functional layer together adhesively and d) unmediatedly laminating one surface of the leather layer onto the functional layer by joining together the leather layer and the functional layer using the adhesive. In this process, the adhesive is applied either to one side of the leather layer or to one surface of the functional layer. In one embodiment of the process, the adhesive is inserted as a continuous adhesive layer between functional layer and leather layer.

A plurality of pieces of the laminates of the invention are combined to fabricate a protective garment. This protective garment is preferably suitable for motor cyclists or fire fighters. As well as for a protective garment, the laminate of the invention can also be used for manufacturing fashion garments.

The protective garment can be a one piece suit or else an individual jacket or an individual trouser.

The individual parts of the protective apparel are joined together by seams. These seams can be glued or preferably sewn together with a yarn. The invention is not restricted thereto and other known methods of joining can be used.

To prevent water getting from the outside via the seams into the interior of the garment, the seams are sealed with a liquid water resistant seam sealing tape. The protective garment may incorporate protectors as additional protection.

The protective apparel consisting of the laminate of the invention thus meets contradictory requirements by combining weather protection, wear comfort and safety. The improved wear comfort especially contributes to the sense of well-being and thus to more safety on the part of the wearer, such as the motor cyclist. The high water vapor permeability transports moisture from the wearer to the outside. At the same time, water cannot get into the interior and thus to the wearer.

A further advantage is that the garment consists only of one thickness of firmly interconnected layers. This makes it easier for the wearer to put the garment on and take it off. The layers making up the garment are firmly joined together and cannot move relative to one another.

**DESCRIPTION OF THE DRAWINGS**

Fig. 1 shows a protective garment for a motor cyclist.
Fig. 2 shows a cross section through the laminate of the invention used to manufacture the protective garment.
Fig. 3 shows a cross section through an embodiment of the laminate of the invention where the functional layer has a reinforcing layer.
Fig. 4 shows a cross section through the functional layer used in Figs. 2 and 3.
Fig. 5 illustrates the process for producing the functional layer used in Figs. 2 and 3.
Fig. 6 shows the process for laminating a reinforcing layer onto the functional layer.
Fig. 7 shows a cross section through a leather layer prior to lamination.
Fig. 8 shows an embodiment of the process for laminating the leather layer.
Fig. 9 shows a further embodiment of the process for laminating the leather layer.

**Definitions**

*Liquid water resistant:*

By liquid water resistant is meant that the material is waterproof at a water ingress pressure of more than 0.13 bar. Preferably, the material can withstand a water pressure of more than 1 bar. The measurement is carried out by exposing a 100 cm$^2$ sample of the material under investigation to a rising water pressure. For this purpose, distilled water having a temperature of $20 \pm 2°C$ is used. The rise in the water pressure is 60 + 3 cmH$_2$O/min. The water ingress pressure of the sample is that pressure at which water passes through the opposite side of the sample. The exact method for carrying out this test is described in the 1981 ISO Standard No. 811.

*Water vapor permeable:*

The term "water vapor permeable" is defined via the water vapor transmission resistance (Ret) of the material. The Ret is a specific material property of sheetlike structures or composites, which determines the "latent" evaporation heat flux through a given area in consequence of an existing stationary partial pressure gradient.
The water vapor transmission resistance is measured using the Hohenstein skin model test, which is described in standard test method Ne. BPI 1.4 of September 1987 of the Bekleidungsphysiologisches Institut e.V. Hohenstein.

*Functional layer*

By functional layer is meant a layer having liquid water resistant and water vapor permeable properties.

*Hydrophobic*

A material is hydrophobic when a drop of liquid water is applied to the surface of the hydrophobic material (leather layer) and the drop assumes the shape of an almost spherical bead with a water contact angle of greater than 90°.

*Spray rating*

The spray rating describes the water bead effect of a surface and serves to assess the degree of a hydrophobicization. It is determined on the basis of the 1981 ISO Standard No. 4920 and expressed in %. The bead effect is assessed by comparison with standardized images.

*Water takeup*

The behavior of leather with regard to water under dynamic stress is assessed in accordance with the 1976 DIN Standard No. 53 338. The water takeup is the amount of water absorbed by the sample, based on the starting weight of the sample. For this, the sample to be investigated (leather layer) is dipped into deionized water and subjected to a dynamic compression test for one hour. The water takeup in % is calculated as follows:

$$W_A = \frac{m1 - m2}{m1} \times 100.$$

For a leather layer to be considered water repellent it must have a water takeup of < 10%.

*Wicking test*

The wicking test measures the rate at which water is transported by capillary forces in sheetlike structures. In accordance with the 1997 DIN Standard No. 53924, the rate of water transport is determined only against the force of gravity. The measurement reported is the height of rise within various time intervals.

*Crumple flex test*

The crumple flex test is used for testing coated materials to determine their stress response properties under difficult conditions. The basis for this test is described in the 1995 ISO Standard No. 7854.
A rectangular piece of coated material is joined together to form a cylinder. The cylinder is situated between two disks.

One disk oscillates around its axis in a 90° angle. The oscillation causes the cylinder to twist. At the same time, the other disk is moving to and fro along its axis. This movement compresses the cylinder along its length. The twisting and compressing of the cylinder is carried out for a predetermined number of cycles or until the test material is damaged. Laminates of the invention are required to withstand at least 50,000 cycles.

## DESCRIPTION OF INVENTION

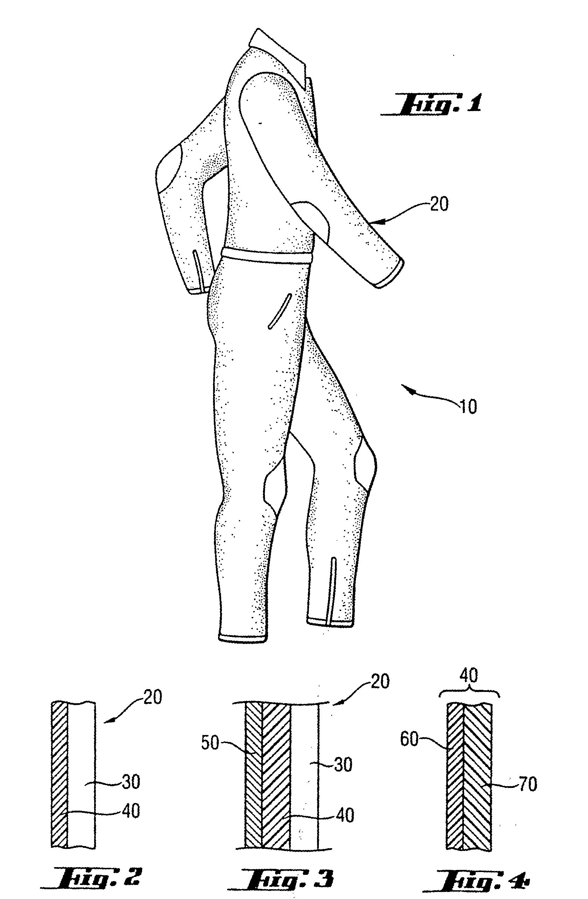

Figure 1 shows a protective garment 10 for a motor cyclist which is fabricated from a laminate according to this invention.

Figure 2 depicts a cross section through the laminate 20 of the invention. The laminate 20 consists of two layers, an outer leather layer 30 and a functional layer 40 laminated thereon.

The functional layer 40 in one embodiment of this invention is a porous polymeric layer 60 having a continuous nonporous hydrophilic water vapor permeable layer 70. Such a layer construction can be seen in Figure 4. The functional layer is liquid water resistant and has a water vapor transmission resistance of less than $150.10^{-3}$ $(m^2 mbar)/W$.

Preferably, the porous polymeric layer 60 is a microporous polymeric membrane having a microscopic structure of open, interconnected microvoids. This layer is air permeable and water vapor permeable.

The microporous membrane in the laminate 20 of the invention has a thickness of 5 μm to 125 μm; preferably, a thickness of 5 μm to 25 μm is present.

Suitable polymers for the microporous membrane include both plastic polymers and elastic polymers. Suitable polymers can be for example polyesters, polyamides, polyolefins, polyketones, polysulfones, polycarbonates, fluoropolymers, polyacrylates, polyurethanes, copolyether esters, copolyetheramides and others. The polymers are preferably plastic polymers.

The most preferred microporous polymeric material is expanded polytetrafluoroethylene (ePTFE). This material is notable for a multiplicity of open, interconnected voids, a large void volume and immense strength. Expanded polytetrafluoroethylene is soft, flexible, has stable chemical properties, a high water vapor transmission rate and a surface possessing good contamination resistance. US patents US-A-3 953 566 and US-A-4 187 390 describe the production of such membranes in microporous expanded polytetrafluoroethylene, and these patents are expressly incorporated herein by reference.

The continuous water vapor permeable layer 70 is a hydrophilic polymer. The hydrophilic layer transports water only by diffusion and does not support the water or air transport by pressure. Thus, moisture such as, for example, water vapor is transported through the layer, but the passage of substances such as -water- bearing entities or microorganisms is precluded.

This property is likewise possessed by the laminate 20 which contains the continuous water vapor permeable layer 70 and the porous polymeric layer 60 and also by articles manufactured therefrom, for example a protective apparel 10. The good resistance to contamination acts as a barrier to contamination of any size.
The water vapor transfer properties of the material allow comfort properties for the wearer.

The continuous water vapor permeable layer 70 has a thickness between 5 μm and 50 μm. The thickness is preferably between 10 μm and 25 μm. This thickness offers the good practical balance between the requisite durability, continuity and the water vapor transmission value.

Examples of suitable continuous water vapor permeable polymers are those of the family of the polyurethanes, the family of the silicones, the family of the copolyether esters or the family of the copolyetheresteramides. Suitable copolyether esters of hydrophilic compositions are taught in US-A-4 493 870 (Vrouenraets) and US-A-4 725 481 (Ostapachenko). Suitable polyurethanes are described in US-A-4 194 041 (Gore). Suitable hydrophilic compositions are described in US-A-4 2340 838 (Foy et al.). A preferred class of continuous water vapor permeable polymers are polyurethanes, particularly those which contain oxyethylene units as described in US-A-4 532 316 (Henn). These materials typically contain a composition having a high concentration of oxyethylene units which make the polymer hydrophilic. The concentration of oxyethylene units is usually greater than 45% of the weight of the original polymer, preferably greater than 60% and most preferably greater than 70%.

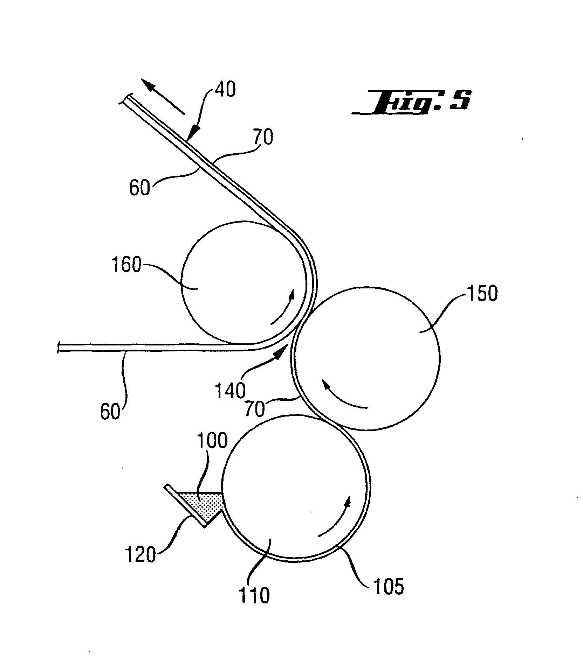

The functional layer 40 to produce the laminate 20 of this invention can be produced according to the teaching of US-A-5 026 591 (Henn et al.). This-method is depicted in Figure 5, but not restricted thereto. Figure 5 shows an arrangement of three rolls. Controlled feeding or metering of molten water vapor permeable polymer 100 is ensured by the polymer container 120 and a gravure roll 110. The water vapor permeable polymer 100 is applied as a thin continuous liquid film 105 to the continuously moving porous polymeric membrane 60 in the nip 140 between the rotating rolls 150 and 160. The first rotating roll 150 is coated with the liquid polymer 70 and the second rotating roll 160 carries the porous polymeric membrane 60 and acts in the nip 140 as the force which causes the liquid polymer 70 to penetrate into the porous structure of the polymeric membrane 60. Downstream of the two rolls 150 and 160 the functional layer 40 consisting of a porous polymeric membrane 60 and a water vapor permeable layer 70 leaves the process.

However, other known constructions of functional layers are possible. In one further examplary embodiment of the functional layer a continuous nonporous hydrophilic water vapor permeable layer is situated between two porous polymeric layers.

As shown in Fig. 3, one preferred embodiment has the functional layer 40 equipped with a reinforcing layer 50. This reinforcing layer 50 is a textile sheet material laminated onto one side of the functional layer 40. The textile sheet material can be a woven fabric, a consecutive course formation knitted fabric, a nonwoven fabric or a synchronous course formation knitted fabric. The material can be one of a multiplicity of materials such as polyesters, polyamides (nylon), polyolefins and others. Preferably, the textile sheet material is a warp-knitted material with a jersey construction.

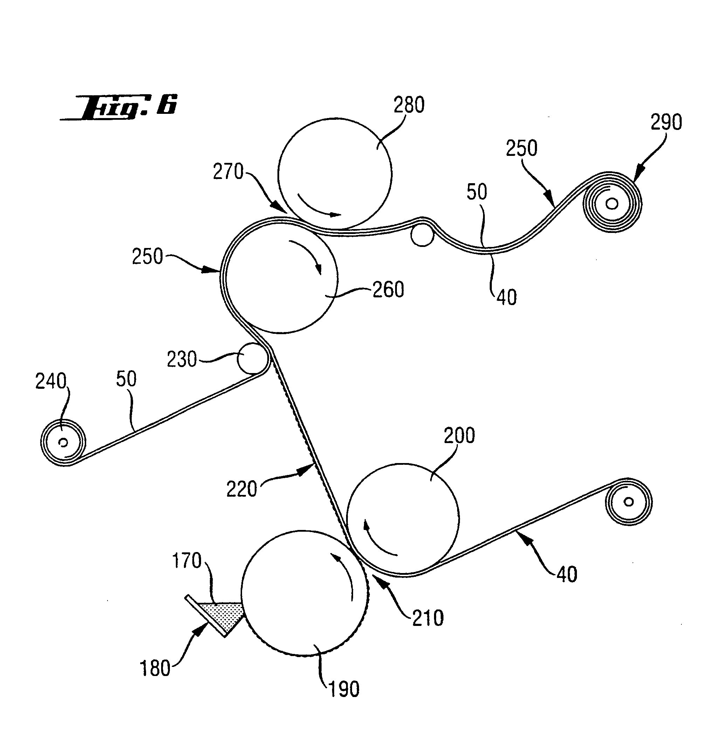

The reinforcing layer 50 is applied to the functional layer 40 using a standard lamination process. This lamination process is depicted in simplified form in Figure 6. In the process, a hotmelt adhesive 170 is applied from an adhesive container 180 to one side of the functional layer 40 in dot form using a gravure roll 190. The functional layer 40 passes with minimal tension against the gravure roll 190 over a rubber roll 200 having a smaller circumference. The rubber roll 200 exerts sufficient pressure in the nip 210 to leave the dots of adhesive to adhere to one side of the functional layer 40.

The adhesive dotted functional layer 220 passes to a lamination roll 230 where it comes into direct contact with the reinforcing layer 50. The reinforcing layer 50 is supplied to the lamination roll 230 off a storage roller 240. The thus produced functional layer laminate 250 is heated to about 125°C by heat supply via the heated roll 260 and then passes via the nip between rolls 260 and 280 to the storage roller 290.

To produce the laminate 20 of the invention, a leather layer 30 of natural leather is provided. The term leather is applied to a material which has been produced from animal hide by tanning or impregnating while retaining the grown fibers in their natural entanglement.

Alternatively, it is also possible to use leather substitutes. These materials have leatherlike properties, but are not obtained from a grown animal hide.

A preferred embodiment comprises using cattlehide apparel leather, but it is also possible to use pig leather, goat leather or kangaroo leather. Apparel leathers are ideally water repellent, highly breathable and air permeable.

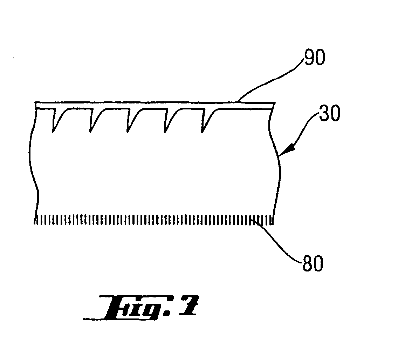

The leather layer 30 can be present as a complete animal hide or precut into a desired shape. Figure 7 depicts a cross section through a leather layer 30. The leather layer 30 is made of a tanned and openly hydrophobicized cattlehide apparel leather. The leather layer 30 has a flesh side 80 and a grain side 90. The grain side 90 corresponds to the outer-animal hide and has a smooth grained surface in the sense that there are no free leather fibers. The flesh side 80, by comparison with the grain side 90, has a rougher surface characterized by free leather fibers.

The leather layer 30 preferably has a thickness of 1 mm - 3 mm. Particular preference is given to a thickness of the leather layer 30 between 1 mm - 1.5 mm.

The leather layer 30 is openly hydrophobicized to prevent the unwanted penetration of liquid water and at the same time to achieve good water vapor permeability. The leather fibers are coated by the hydrophobicizer or with hydrophobic end groups and thereby rendered water resistant. Since the fiber interstitial spaces are not blocked, the leather layer remains breathable and water vapor permeable.

Suitable hydrophobicizers include paraffins, waxes, metal soaps, polysiloxanes, etc. with the addition of aluminum or zirconium salts, quaternary organic compounds, urea derivatives, fatty acid modified melamine resins, chromium complex salts, silicones, organotin compounds or glutardialdehyde compounds. Polysiloxanes, for example, probably bond to the leather fiber via oxygen bridges, the hydrophobic alkyl-silyl radicals pointing away from the fibers. Preference is given to using fluorocarbons. These are commercially obtainable, for example, under the name of Densodrin® from BASF and Scotchgard FX-3573 from 3M. These organofluorine compounds are responsible for reduced surface tensions of the terminal fluoroalkyl groups compared with the corresponding alkyl groups. The resulting surface properties are responsible for a negative capillary pressure with regard to water. This prevents water penetrating into the fibrous structure of the leather layer.

The hydrophobicizer is applied by dipping, drumming or spraying. These methods are known in the art.

In a preferred embodiment, the leather layer 30 is hydrophobicized by saturation or coating with the above-described water vapor permeable hydrophobicizers.

Openly hydrophobicized leathers are generally available, for example from the Ritsch company in Austria.

In one embodiment, the leather layer 30 is not only hydrophobicized but at the same time also rendered oil resistant. For this purpose, the leather layer 30 is saturated or coated with oleophobicizers in order that improved dirt repellency is achieved. Suitable oleophobicizers include the abovementioned fluorocarbons which confer on the leather an oil rating of 5 when tested in the new state according to the 1989 AATCC standard 118. However, oleophobicization is advisable only if the water vapor permeability of the leather layer 30 is not affected.

In a particular embodiment, the hydrophobicizer simultaneously comprises an oleophobicizer such as, for example, the leather protection product FC-3583 from 3M, which is applied to the leather layer in aqueous finishing processes such as, for example, spraying or roll application processes.

The degree of hydrophobicization is determined via the spray rating, the wicking test and the determination of the water takeup.

Furthermore, the leather layer 30 has to have a low abrasion rate. The abrasion rate is evaluated via the determination of the abrasion resistance by the so-called Darmstadt method. This test method was developed by the Technical University of Darmstadt. The test method simulates the loading due to a rider who weighs 75 kg and who is moving on his back along a real road surface in a stable slide. The velocity used in this test method is 60 km/h. It is assumed that starting from this velocity, the slide is continued until it stops. For this test, the samples of material are attached in the holders of a rotating sample holder. The sample holder is accelerated to the selected starting velocity by a motor. Once the starting velocity is reached, the samples are lowered onto the road surface and the motor is switched off. The sample holder is decelerated by the frictional forces between the road surface and the samples until it has come to a stop. The samples are then rated visually. An index for the magnitude of abrasion is summarized in Table 1:

Table 1

| Abrasion index | Magnitude | Description |
|---|---|---|
| 1 | none | No formation of holes |
| 2 | a few | Some holes have partially opened up on the surface of the sample |
| 3 | partial | Holes have opened up in regions of the surface of the sample. Material is no longer completely laminated in these regions |
| 4 | some | Holes have opened up in large regions of the surface of the sample |
| 5 | complete | Pattern of holes through the surface of the sample |

Table 2 below depicts suitable openly hydrophobicized leather layers 30 as starting material for the production of laminate 20 of the invention using leathers from Risch and Finco by way of example. These leather layers are notable for example for a low water vapor transmission resistance and, on the other hand, have a high spray rating and a low water takeup.

Table 2

| Material | Thickness (mm) | Spray rating % | Abrasion resistance by Darmstadt method | Wicking test in cm/h | Water takeup in % | Water vapor transmission resistance ($10^3 m^2 mbar/W$) |
|---|---|---|---|---|---|---|
| Ritsch Leather | 1.4 | 80 | <3 | <1 | 4.9 | 121.5 |
| Finco Leather | 1.4 | 70 | <3 | <1 | 7.91 | 178.7 |

The leather layer 30 is laminated in the examples of Table 2 with its flesh side 80 onto one side of the functional layer 40.

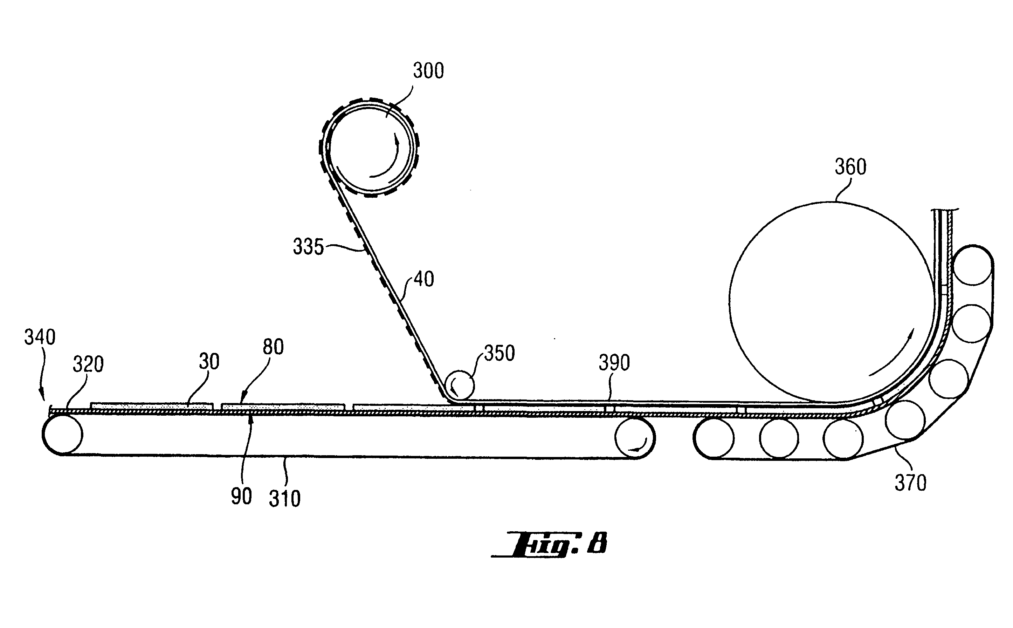

A preferred apparatus for laminating the functional layer 40 onto a leather layer 30 is depicted in Figure 8. The apparatus is made up of a conveyor belt 310 with an upstream end 340, a lamination roll 350, a hot press in the form of a heatable roll 360, a conveyor belt 370 guided in a 90° angle around the hot press 360, and a storage roll 300 for the functional layer material 40.

A conveyor belt 310 feeds a leather layer 30 and an attached functional layer 40 together to a hot press 360, where the two layers 30, 40 are adhesively bonded together.

The conveyor belt 310 has situated on it a continuous textile layer 320, which can preferably be a woven fabric, a synchronous course formation knitted fabric, a nonwoven fabric or a consecutive course formation knitted fabric. The material for this purpose can be for example a mechanically consolidated nonwoven. The continuous textile layer 320 has for its function to carry the individual leather layers 30 continuously throughout the entire lamination process.

For the lamination process, a leather layer 30 is placed onto the textile layer 320 at the upstream end 340 of the conveyor belt 310 and is transported at a conveyor belt speed of 2 m/min 310 in the direction of the hot press 360. The leather layer 30 is placed onto the textile layer 320 in such a way that the flesh side 80 faces away from the surface of the textile layer 320 and the grain side 90 comes to rest directly on the textile layer 320. This can be done manually or mechanically. The first leather layer 30 can be followed by further leather layers 30 being placed onto the conveyor belt 310.

From a supply roller 300 a functional layer material 40 is placed via a lamination roller 350 onto the flesh side 80 of a leather layer 30. Preferably, the functional layer 40 is provided with a reinforcing layer 50 as depicted in Fig. 3. The functional layer 40 is unwound from the supply roller 300 in such a way that the functional layer 40 comes to rest directly on the flesh side 80 of the leather layer 30. The conveyor belt 310 transports the three layers - textile layer 320, leather layer 30 and functional layer 40 - to the hot press 360.

For the leather layer 30 and the functional layer 40 to be unmediatedly bonded together adhesively, an adhesive layer 330 has to be positioned between the two layers.

In a preferred embodiment, the functional layer 40 is provided with an adhesive layer 330 on that side with which it rests unmediatedly on the flesh side 80 of the leather layer 30. The adhesive 330 can be situated on the functional layer 40 in the form of powder 335.

The adhesive 330 is selected from the group of the polyurethanes, polyesters and polyamides. The adhesive preferably is a polyurethane.

One suitable adhesive is available from Dakota Coatings under the name of Unex 4073. A further suitable adhesive is a powder adhesive P-VEG which is spread over the surface in a quantity of 20g/m$^2$. The adhesive is supplied by Bostik company in the United Kingdom and granulated by the Schoetti company of Switzerland.

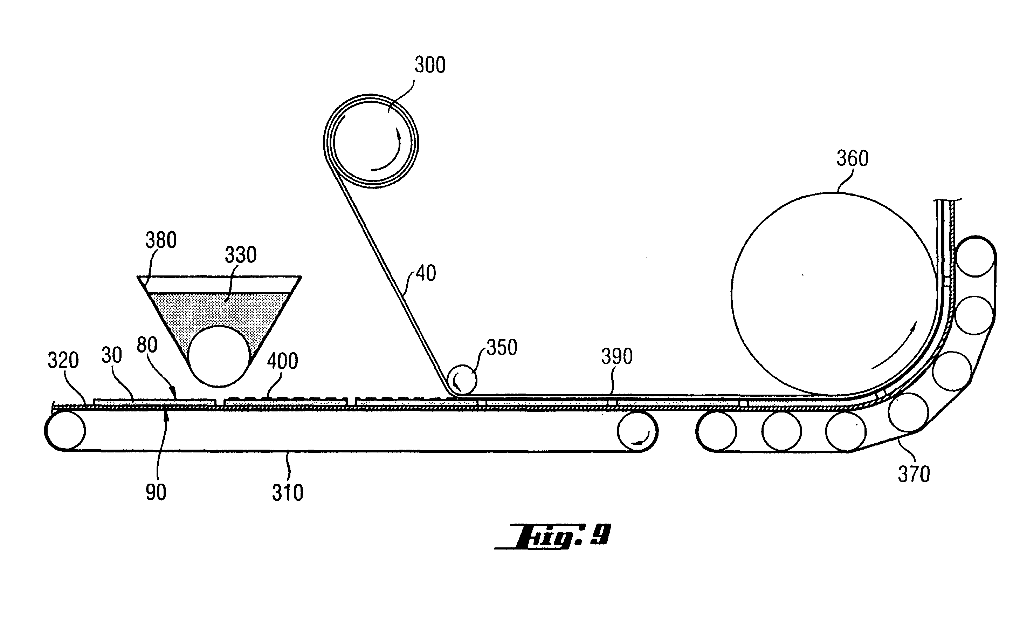

In a further embodiment of the invention, the adhesive 330 is applied to the flesh side 80 of the leather layer 30 prior to lamination. This can be accomplished in a separate operation or preferably on the conveyor belt 310 before the functional layer 40 is placed on the leather layer 30. An appropriate apparatus is depicted in Figure 9. As can be seen in Figure 9, a metering means 380 for disbursing the adhesive 330 on the leather layer 30 is situated unmediatedly above the conveyor belt 310. The adhesive 330 can be sprayed on the leather layer 30. For this, the adhesive 330 is in powder form 400.

The adhesive used is selected from the same adhesives as described above.

In both Figure 7 and Figure 8, the conveyor belt 310 supplies the hot press 360 with a layer 390 comprising a textile layer 320, a leather layer 30, an adhesive 335, 400 and a functional layer 40.

The above-described layers are laminated together in the hot press 360. The hot press 360 is in one embodiment a heatable lamination roll. To obtain a high lamination effect, the textile layer 320 with the leather layer 30 and the functional layer 40 is guided by a second conveyor belt 370 around the lamination roll 360 at a 90° angle. The lamination temperatures are between 50 - 180°C. The lamination pressure can be between 1 p/cm$^2$ and 10,000 p/cm$^2$. In one embodiment, the pressure is 400 p/cm$^2$. The temperature of the lamination roll 360 heats the adhesive 335, 400, so that it is able to penetrate into the flesh side 80 of the leather layer 30 and creates a permanent bond to the functional layer 40.

The finished laminate is carried by the conveyor belt 370 out of the hot press 360 and then wound up onto a storage roller and cooled down.

Instead of a continuous lamination with the above-described lamination roll 360, the lamination can also be effected by means of a hot platen press. For this purpose, the layers to be laminated are pressed between two heatable platens.

Following the cooling process, the finished leather laminate 20 is separated out of the textile layer 320 and the functional layer 40 in accordance with the outer contours of the leather layer 30. The separating out can be effected by stamping or cutting. Since an adhesive 330 is present only between the leather layer 30 and the functional layer 40, the textile layer 320 can simply be pulled off the grain side 90 of the leather layer 30.

Preferably, after lamination, the finished leather laminate 20 can be immediately cut or stamped into the shape of the parts from which protective apparel is to be fabricated. The laminated and made-up leather parts are used to manufacture a protective jacket, a protective trouser or a complete protective suit, for example for motor cyclists. The outer surface of the leather layer faces away from the body. The individual parts are joined together at their outer edges, via a seam, to form a jacket. A number of techniques for forming a seam between the individual parts are common knowledge. In one embodiment, the individual parts are sewn together with a yarn. A seam sealing tape, for example GORE-SEAM® seam sealing tape is used to weld the pin holes of the stitched seam shut to render them liquid water resistant.

Example 1

A leather from Finco (Italy) 1.4 mm in thickness is cut into a rectangular shape. The leather has been openly hydrophobicized and has a spray rating of 80%. The Ret value of the leather is $178.7 \times 10^{-3}$ m$^2$ mbar/W. The leather has an abrasion value of <3.
The leather layer is unmediatedly laminated together with an functional layer to form a two-ply composite. The functional is layer made of ePTFE which has been coated with a polyurethane layer. The side of the functional layer not coated with the polyurethane layer is joined to a reinforcing layer of polyester. The adhesive used for laminating the polyurethane layer side of the functional layer to the leather layer is a polyurethane adhesive.
The Ret value of the laminated leather is $245.7 \times 10^{-3}$ m$^2$ mbar/W. This value shows that the water vapor transmission resistance has changed only minimally compared with the unlaminated leather. Thus, the laminate of the invention has a low water vapor transmission resistance.
The laminate is waterproof at a water pressure of 0.2 bar.
The laminate further endures than 200,000 cycles in the crumple flex test without delaminating. The laminate is accordingly durable.

Example 2

A leather from Ritsch 1.4 mm in thickness is cut into a rectangular shape. The leather has been openly hydrophobicized and has a spray rating of · 70%. The Ret value of the leather is $121.5 \times 10^{-3}$ m$^2$ mbar/W. The leather has an abrasion value of <3.
The leather layer is directly laminated together to an functional layer to form a two-ply composite. The ePTFE functional layer has been coated with a polyurethane layer and the leather layer is laminated to the polyurethane layer of the functional layer. The functional layer is joined to a reinforcing layer of polyester on its other side. The adhesive used for laminating the ePTFE functional layer to the leather layer is a polyurethane adhesive.
The Ret value of the laminated leather is $157.9 \times 10^{-3}$ m$^2$ mbar/W. This value is only very slightly different to the unlaminated leather. Thus, the laminate has a very low water vapor transmission resistance which is comparable with a laminate.
The laminate is waterproof at a water pressure of 0.2 bar.
The laminate further endures than 1,000,000 cycles in the crumple flex test without delaminating. The laminate is accordingly durable.

**LIST OF REFERENCE NUMERALS**

| | |
|---|---|
| 10 | protective garment |
| 20 | laminate |
| 30 | leather layer |
| 40 | functional layer |
| 50 | textile sheet material |
| 60 | porous polymeric layer |
| 70 | continuous water vapor permeable layer |
| 80 | flesh side of leather layer |
| 90 | grain side of leather layer |
| 100 | water vapor permeable polymer |
| 105 | continuous polymer film |
| 110 | engraved roll |
| 120 | polymer container |

130
140   nip
150   roll
160   roll
170   hotmelt adhesive
180   adhesive container
190   engraved roll
200   rubber roll
210   nip
220   functional layer with adhesive dots
230   lamination roll
240   storage roller
250   functional layer laminate
260   heated roll
270   nip
280   roll
290   storage roller
300   storage roller
310   conveyor belt
320   textile layer
330   adhesive
335   dotwise application of adhesive
340   upstream end of conveyor belt
350   lamination roll
360   hot press
370   conveyor belt
380   metering means
390   layer
400   pulverulent application of adhesive

**Claims**

1. A laminate comprising

   a liquid water resistant and water vapor permeable functional layer,
   and at least one leather layer having an outer surface and an inner surface,

   wherein the leather layer is openly hydrophobicized and
   is laminated with its inner surface unmediatedly onto one side of the functional layer using a powder adhesive, the laminate having a water vapor transmission resistance (Ret) of less than $600 \times 10^{-3}$ ($m^2$mbar)/W and a crumble flex durability of at least 50.000 cycles measured in accordance with ISO standard 7854 (1995).

2. The laminate of claim 1, wherein the inner surface of the leather layer is the flesh side of the leather.

3. The laminate of claim 1, wherein the adhesive is selected from the group of the polyurethanes, polyesters, polyamides.

4. The laminate of claim 3, wherein the adhesive is a copolyester or a copolyamide.

5. The laminate of claim 3, wherein the adhesive is a polyurethane.

6. The laminate of claim 3, wherein the adhesive is a mixture of adhesives from the group of the polyurethanes, polyesters, polyamides.

7. The laminate of claim 1, wherein the adhesive is provided in a quantity of 20g/$m^2$.

8. The laminate of claim 1, wherein the leather layer has been saturated with a hydrophobicizer from the group of the fluorocarbons, silicones or polysiloxanes.

9. The laminate of claim 8, wherein the hydrophobicizer is a fluorocarbon.

10. The laminate of claim 1, wherein the leather layer comprises natural leather.

11. The laminate of claim 1, wherein the leather layer comprises a leather substitute.

12. The laminate of claim 1, wherein the leather layer has a spray rating greater than 70%.

13. The laminate of claim 1, wherein the leather layer has a thickness between 0.8 mm and 2 mm.

14. The laminate of claim 13, wherein the leather layer has a thickness of between 1 mm and 1.5 mm.

15. The laminate of claim 1 having a water vapor transmission resistance (Ret) of less than $400 \times 10^{-3}$ $(m^2 mbar)/W$.

16. The laminate of claim 15 having a water vapor transmission resistance (Ret) of less than $300 \times 10^{-3}$ $(m^2\ mbar)/W$.

17. The laminate of claim 1, wherein the leather layer after complete immersion in deionized water for 1 hour increases by less than 50% in weight compared with a dry laminate.

18. The laminate of claim 17, wherein the leather layer after complete immersion in deionized water for 1 hour increases by less than 10% in weight compared with a dry laminate.

19. The laminate of claim 1, wherein the functional layer comprises a textile sheet material which is laminated onto the other side of the functional layer.

20. The laminate of claim 19, wherein the textile sheet material is a woven fabric, a consecutive course formation knitted fabric, a nonwoven fabric or a synchronous course formation knitted fabric.

21. The laminate of claim 1, wherein the functional layer is a membrane or a film.

22. The laminate of claim 1, wherein the functional layer is selected from the group of substances consisting of polyesters, polyamides, polyolefins including polyethylene and polypropylene, polyvinyl chloride, polyketones, polysulfones, polycarbonates, fluoropolymers including polytetrafluoroethylene (PTFE), polyacrylates, polyurethanes, copolyether esters, copolyetheramides.

23. The laminate of claim 22, wherein the functional layer is expanded PTFE.

24. The laminate of claim 1, wherein the functional layer comprises a porous polymeric layer made of ePTFE having polyurethane layer and the leather layer is laminated to the polyurethane layer of the functional layer.

25. The laminate of claim 1, wherein the laminate is waterproof at a water pressure of greater than 0.13 bar.

26. The laminate of claim 1, wherein the leather layer has an abrasion resistance of <3 by the Darmstadt method.

27. Apparel comprising a laminate as claimed in any of claims 1-26, wherein the outer surface of the leather layer faces away from the body.

28. A process for producing a laminate comprising the following steps:

> a) providing an openly hydrophobicized leather layer having an inner surface and an outer surface
> b) providing a liquid water resistant and water vapor permeable functional layer
> c) providing a powder adhesive for bonding the leather layer and the functional layer together adhesively
> d) unmediatedly laminating the inner surface of the leather layer onto the functional layer by joining the powder adhesive together between the leather layer and the functional layer, thereby providing a laminate having a crumble flex durability of at least 50,000 cycles measured in accordance with ISO standard 7854 (1995).

29. The process of claim 28, wherein the adhesive is applied to one side of the functional layer prior to step b).

30. The process of claim 29, wherein the inner surface of the leather layer is laminated onto the adhesive-provided side of the functional layer.

31. The process of claim 28, wherein the inner surface of the leather layer is provided with an adhesive prior to step a).

32. The process of claim 31, wherein the functional layer is laminated onto the adhesive-provided inner surface of the leather layer.

33. The process of claim 28, wherein the adhesive is selected from the group of the polyurethanes, polyesters, polyamides.

34. The process of claim 33, wherein the adhesive is a polyurethane.


**Patentansprüche**

1. Laminat mit

   einer wasserdichten und wasserdampfdurchlässigen Funktionsschicht

   und mindestens einer Lederschicht mit einer Außenseite und einer Innenseite,

   wobei die Lederschicht offen hydrophobiert ist und
   mit ihrer Innenseite unter Verwendung eines pulverförmigen Klebstoffs unmittelbar auf eine Seite der Funktionsschicht laminiert ist,
   wobei das Laminat einen Wasserdampfdurchgangswiderstand (Ret) von weniger als 600 x $10^{-3}$ ($m^2$ mbar)/W aufweist und nach der sogenannten "Crumple Flex Test" Methode (gemäß der Norm ISO 7854 (1995)) mindestens 50000 Zyklen standhält.

2. Laminat nach Anspruch 1, wobei die Innenseite der Lederschicht die Fleischseite des Leders ist.

3. Laminat nach Anspruch 1, wobei der Klebstoff aus der Gruppe der Polyurethane, Polyester, Polyamide gewählt ist.

4. Laminat nach Anspruch 3, wobei der Klebstoff ein Co-Polyester oder ein Co-Polyamid ist.

5. Laminat nach Anspruch 3, wobei der Klebstoff ein Polyurethan ist.

6. Laminat nach Anspruch 3, wobei der Klebstoff ein Gemisch von Klebstoffen aus der Gruppe der Polyurethane, Polyester, Polyamide ist.

7. Laminat nach Anspruch 1, wobei der Klebstoff in einer Menge von 20 g/$m^2$ vorgesehen ist.

8. Laminat nach Anspruch 1, wobei die Lederschicht mit einem Hydrophobiermittel aus der Gruppe der Fluorcarbone, Silikone oder Polysiloxane getränkt ist.

9. Laminat nach Anspruch 8, wobei das Hydrophobiermittel ein Fluorcarbon ist.

10. Laminat nach Anspruch 1, wobei die Lederschicht ein natürliches Leder beinhaltet.

11. Laminat nach Anspruch 1, wobei die Lederschicht einen Lederersatzstoff beinhaltet.

12. Laminat nach Anspruch 1, wobei die Lederschicht einen Spraywert von größer 70% aufweist.

13. Laminat nach Anspruch 1, wobei die Lederschicht eine Dicke zwischen 0,8 mm und 2 mm hat.

14. Laminat nach Anspruch 13, wobei die Lederschicht eine Dicke zwischen 1 mm und 1,5 mm hat.

**15.** Laminat nach Anspruch 1, wobei das Laminat einen Wasserdampfdurchgangswiderstand (Ret) von weniger als 400 x 10$^{-3}$ (m$^2$ mbar)/W hat.

**16.** Laminat nach Anspruch 15, wobei das Laminat einen Wasserdampfdurchgangswiderstand (Ret) von weniger als 300 x 10$^{-3}$ (m$^2$ mbar)/W hat.

**17.** Laminat nach Anspruch 1, wobei die Lederschicht nach vollständigem Eintauchen in deionisiertes Wasser nach 1 Stunde eine Gewichtszunahme von weniger als 50% im Vergleich zu einem trockenen Laminat aufweist.

**18.** Laminat nach Anspruch 17, wobei die Lederschicht nach vollständigem Eintauchen in deionisiertes Wasser nach 1 Stunde eine Gewichtszunahme von weniger als 10% im Vergleich zu einem trockenen Laminat aufweist.

**19.** Laminat nach Anspruch 1, wobei die Funktionsschicht ein textiles Flächengebilde enthält, welches auf die andere Seite der Funktionsschicht laminiert ist.

**20.** Laminat nach Anspruch 19, wobei das textile Flächengebilde ein Gewebe, ein Gestricke, ein Vlies oder ein Gewirke ist.

**21.** Laminat nach Anspruch 1, wobei die Funktionsschicht eine Membrane oder ein Film ist.

**22.** Laminat nach Anspruch 1, wobei die Funktionsschicht aus der Gruppe von Stoffen bestehend aus Polyester, Polyamide, Polyolefine enthaltend Polyethylen und Polypropylen, Polyvinylchlorid, Polyketone, Polysulfone, Polycarbonate, Fluorpolymere enthaltend Polytetrafluorethylen (PTFE), Polyacrylate, Polyurethane, Copolyetherester, Copolyetheramide selektiert ist.

**23.** Laminat nach Anspruch 22, wobei die Funktionsschicht expandiertes PTFE ist.

**24.** Laminat nach Anspruch 1, wobei die Funktionsschicht eine poröse polymere Schicht aus ePTFE mit Polyurethanschicht enthält und die Lederschicht auf die Polyurethanschicht der Funktionsschicht laminiert ist.

**25.** Laminat nach Anspruch 1, wobei das Laminat einen Wassereintrittsdruck von größer als 0,13 bar aufweist.

**26.** Laminat nach Anspruch 1, wobei die Lederschicht einen Abrasionswiderstand von <3 nach der Darmstädter Methode hat.

**27.** Bekleidung aus einem Laminat nach den Ansprüchen 1-26, wobei die Außenseite der Lederschicht körperabgewandt ist.

**28.** Verfahren zur Herstellung eines Laminats mit den folgenden Schritten:

    a) Bereitstellen einer offen hydrophobierten Lederschicht mit einer Innenseite und einer Außenseite

    b) Bereitstellen einer wasserdichten und wasserdampfdurchlässigen Funktionsschicht

    c) Bereitstellen eines pulverförmigen Klebstoffes zum Verkleben der Lederschicht und der Funktionsschicht

    d) Unmittelbares Laminieren der Innenseite der Lederschicht auf die Funktionsschicht durch Zusammenfügen des pulverförmigen Klebstoffes zwischen der Lederschicht und der Funktionsschicht, wobei man ein Laminat erhält, das nach der sogenannten "Crumple Flex Test" Methode (gemäß der Norm ISO 7854 (1995)) mindestens 50000 Zyklen standhält.

**29.** Verfahren nach Anspruch 28, wobei vor Schritt b) der Klebstoff auf einer Seite der Funktionsschicht aufgebracht wird.

**30.** Verfahren nach Anspruch 29, wobei die Innenseite der Lederschicht auf die mit einem Klebstoff versehene Seite der Funktionsschicht laminiert wird.

**31.** Verfahren nach Anspruch 28, wobei vor Schritt a) die Innenseite der Lederschicht mit einem Klebstoff versehen ist.

**32.** Verfahren nach Anspruch 31, wobei die Funktionsschicht auf die mit einem Klebstoff versehene Innenseite der Lederschicht laminiert ist.

**33.** Verfahren nach Anspruch 28, wobei der Klebstoff aus der Gruppe der Polyurethane, Polyester, Polyamide gewählt ist.

**34.** Verfahren nach Anspruch 33, wobei der Klebstoff ein Polyurethan ist.

**Revendications**

**1.** Stratifié comprenant

une couche fonctionnelle liquide résistante à l'eau et perméable à la vapeur d'eau, et au moins une couche de cuir ayant une surface externe et une surface interne, dans lequel la couche de cuir est rendue hydrophobe ouvertement et est laminée avec sa surface interne directement sur un côté de la couche fonctionnelle, en utilisant un adhésif pulvérulent, le stratifié ayant une résistance de transmission de vapeur d'eau (Ret) de moins de 600 x $10^{-3}$ ($m^2$mbars)/W et une durabilité de souplesse à l'écrasement d'au moins 50 000 cycles, mesurée conformément à la norme ISO 7854 (1995).

**2.** Stratifié selon la revendication 1, dans lequel la surface interne de la couche de cuir est le côté chair du cuir.

**3.** Stratifié selon la revendication 1, dans lequel l'adhésif est sélectionné parmi le groupe des polyuréthannes, des polyesters, des polyamides.

**4.** Stratifié selon la revendication 3, dans lequel l'adhésif est un copolyester ou un copolyamide.

**5.** Stratifié selon la revendication 3, dans lequel l'adhésif est un polyuréthanne.

**6.** Stratifié selon la revendication 3, dans lequel l'adhésif est un mélange d'adhésifs provenant du groupe des polyuréthannes, des polyesters, des polyamides.

**7.** Stratifié selon la revendication 1, dans lequel l'adhésif est mis à disposition dans une quantité de 20 g/$m^2$.

**8.** Stratifié selon la revendication 1, dans lequel la couche de cuir a été saturée à l'aide d'un agent hydrophobant du groupe des fluorocarbones, des silicones ou des polysiloxanes.

**9.** Stratifié selon la revendication 8, dans lequel l'agent hydrophobant est un fluorocarbone.

**10.** Stratifié selon la revendication 1, dans lequel la couche de cuir comprend du cuir naturel.

**11.** Stratifié selon la revendication 1, dans lequel la couche de cuir comprend un produit de substitution du cuir.

**12.** Stratifié selon la revendication 1, dans lequel la couche de cuir a un degré de pulvérisation supérieur à 70%.

**13.** Stratifié selon la revendication 1, dans lequel la couche de cuir a une épaisseur comprise entre 0,8 mm et 2 mm.

**14.** Stratifié selon la revendication 13, dans lequel la couche de cuir a une épaisseur comprise entre 1 mm et 1,5 mm.

**15.** Stratifié selon la revendication 1, ayant une résistance de transmission de vapeur d'eau (Ret) de moins de 400 x $10^{-3}$ ($m^2$mbars) /W.

**16.** Stratifié selon la revendication 15, ayant une résistance de transmission de vapeur d'eau (Ret) de moins de 300 x $10^{-3}$ ($m^2$mbars)/W.

**17.** Stratifié selon la revendication 1, dans lequel la couche de cuir, après immersion complète dans de l'eau désionisée pendant 1 heure, augmente de moins de 50% en poids, par comparaison à un stratifié sec.

18. Stratifié selon la revendication 17, dans lequel la couche de cuir, après immersion complète dans de l'eau désionisée pendant 1 heure, augmente de moins de 10% en poids, par comparaison à un stratifié sec.

19. Stratifié selon la revendication 1, dans lequel la couche fonctionnelle comprend un matériau de feuille textile qui est laminé sur l'autre côté de la couche fonctionnelle.

20. Stratifié selon la revendication 19, dans lequel le matériau de feuille textile est une étoffe tissée, une étoffe tricotée à formation à cours consécutif, une étoffe non tissée ou une étoffe tricotée à formation à cours synchrone.

21. Stratifié selon la revendication 1, dans lequel la couche fonctionnelle est une membrane ou un film.

22. Stratifié selon la revendication 1, dans lequel la couche fonctionnelle est sélectionnée parmi le groupe des substances composées des polyesters, des polyamides, des polyoléfines, y compris le polyéthylène et le polypropylène, le chlorure de polyvinyle, des polycétones, des polysulfones, des polycarbonates, des fluoropolymères, y compris le polytétrafluoroéthylène (PTFE), des polyacrylates, des polyuréthannes, des esters de copolyéthers, des copolyétheramides.

23. Stratifié selon la revendication 22, dans lequel la couche fonctionnelle est du PTFE expansé.

24. Stratifié selon la revendication 1, dans lequel la couche fonctionnelle comprend une couche polymère poreuse faite de ePTFE, ayant une couche de polyuréthanne, et dans lequel la couche de cuir est laminée à la couche de polyuréthanne de la couche fonctionnelle.

25. Stratifié selon la revendication 1, dans lequel le stratifié est imperméable à l'eau à une pression d'eau de plus de 0,13 bar.

26. Stratifié selon la revendication 1, dans lequel la couche de cuir a une résistance à l'abrasion <3 par la méthode Darmstadt.

27. Appareillage comprenant un stratifié selon l'une quelconque des revendications 1-26, dans lequel la surface externe de la couche de cuir est tournée à l'écart du corps.

28. Procédé de production d'un stratifié comprenant les étapes suivantes :

   a) la mise à disposition d'une couche de cuir rendue hydrophobe ouvertement ayant une surface interne et une surface externe
   b) la mise à disposition d'une couche fonctionnelle liquide résistante à l'eau et perméable à la vapeur d'eau
   c) la mise à disposition d'un adhésif pulvérulent en vue de la liaison adhésive l'une à l'autre de la couche de cuir et de la couche fonctionnelle
   d) le laminage direct de la surface interne de la couche de cuir sur la couche fonctionnelle en joignant l'adhésif pulvérulent ensemble entre la couche de cuir et la couche fonctionnelle, en mettant ainsi à disposition un stratifié ayant une durabilité de souplesse à l'écrasement d'au moins 50 000 cycles, mesurée conformément à la norme ISO 7854 (1995).

29. Procédé selon la revendication 28, dans lequel l'adhésif est appliqué sur un côté de la couche fonctionnelle avant l'étape b).

30. Procédé selon la revendication 29, dans lequel la surface interne de la couche de cuir est laminée sur le côté muni d'adhésif de la couche fonctionnelle.

31. Procédé selon la revendication 28, dans lequel la surface interne de la couche de cuir est munie d'un adhésif avant l'étape a).

32. Procédé selon la revendication 31, dans lequel la couche fonctionnelle est laminée sur la surface interne munie d'adhésif de la couche de cuir.

33. Procédé selon la revendication 28, dans lequel l'adhésif est sélectionné parmi le groupe des polyuréthannes, des polyesters, des polyamides.

**34.** Procédé selon la revendication 33, dans lequel l'adhésif est un polyuréthanne.

Fig. 1

20

10

Fig. 2

20

30

40

Fig. 3

50

20

30

40

Fig. 4

40

60

70

*Fig. 5*

Fig. 6

Fig. 1

Fig. 8

EP 1 056 595 B1

_Fig. 9_

EP 1 056 595 B1